# EUROPÄISCHE PATENTANMELDUNG

(11) **EP 2 248 620 A1**
(43) Veröffentlichungstag der Anmeldung: **10.11.2010**
(21) Anmeldenummer: 10405095.0
(22) Anmeldetag: 05.05.2010
(51) Int. Cl.: B23K 1/00, B23K 28/00, F16L 13/02, F16L 58/14

(54) **Stoffschlüssige Verbindung zweier emaillierter Stahlbauteile**

(30) Priorität: 08.05.2009 CH 7222009
(71) Anmelder: Etoile Holding GmbH, 4170 Ettingen (CH)
(72) Erfinder: Weber, Stefan, 68804 Altlussheim (DE); Boeglin, Francis, 68720 Illfurth (FR)
(74) Vertreter: Bohest AG

(57) **Zusammenfassung**

Bei einem Verfahren zum Verbinden eines Verbindungsbereiches (10) eines emaillierten Stahlbauteils (1) mit einem weiteren Verbindungsbereich (20) eines weiteren emaillierten Stahlbauteils (2), wobei der Verbindungsbereich (10) und der weitere Verbindungsbereich (20) jeweils einen emaillierten Bereich (11, 21) und einen nicht emaillierten Bereich (12, 22) umfassen, werden der Verbindungsbereich (10) und der weitere Verbindungsbereich (20) zusammengefügt. Anschliessend werden die emaillierten Bereiche (11, 21) des Verbindungsbereichs (10) und des weiteren Verbindungsbereichs (20) stoffschlüssig verbunden sowie werden die nicht emaillierten Bereiche (12, 22) des Verbindungsbereichs (10) und des weiteren Verbindungsbereichs (20) stoffschlüssig verbunden.

## Beschreibung

Die vorliegende Erfindung betrifft ein Verfahren zum Verbinden eines Verbindungsbereiches eines emaillierten Stahlbauteils mit einem weiteren Verbindungsbereich eines weiteren emaillierten Stahlbauteils gemäss dem unabhängigen Verfahrensanspruch sowie eine Verbindung eines emaillierten Stahlbauteils mit einem weiteren emaillierten Stahlbauteil gemäss dem unabhängigen Vorrichtungsanspruch, der die Verbindung definiert.

In der chemischen Industrie werden emaillierte Stahlbauteile wie Rohrteile, Behälter, Apparatestutzen usw. eingesetzt, um zu verhindern, dass die Stahlbauteile bei Kontakt mit hochkorrosiven Produkten von diesen zerfressen werden. Die hierzu verwendeten Emaille sind als Chemieemaille bekannt und haben im allgemeinen niedere Abtragungsraten in Säure und Lauge, eine gute Temperaturwechselbeständigkeit und Haftfähigkeit auf Emailträgermaterialien.

Die Verbindung zweier emaillierter Stahlbauteile erfolgt normalerweise über Flansche, die ebenfalls teilweise emailliert werden müssen. Die Flansche zweier emaillierter Stahlbauteile werden kraftschlüssig miteinander verbunden, z. B. mit Flanschmanschetten oder direkt mit Schrauben und Muttern, die in Löcher der Flansche Aufnahme finden. Zwischen den Flanschen muss eine Dichtung, z. B. in Form eines Dichtungsrings, eingelegt werden, damit zu transportierende Produkte nicht entweichen können.

Herkömmliche Flansche haben einen nicht zu vernachlässigenden Platzbedarf. Ausserdem ist die Montage mit Schrauben und Muttern aufwändig. Die eingesetzte Dichtung kann Leck schlagen und eine Kontrolle über die Dichtigkeit ist nur mit grossem Aufwand zu realisieren.

Der vorliegenden Erfindung liegt daher die Aufgabe zugrunde, ein Verfahren und/oder eine Vorrichtung vorzuschlagen, mit welchen eine Verbindung zweier emaillierter Stahlbauteile vorgenommen werden kann und die insbesondere die obenstehenden Nachteile nicht aufweist.

Diese Aufgabe wird durch das erfindungsgemässe Verfahren gelöst, wie es im unabhängigen Verfahrensanspruch definiert ist. Der unabhängige Vorrichtungsanspruch definiert eine Verbindung eines emaillierten Stahlbauteils mit einem weiteren emaillierten Stahlbauteil. Vorteilhafte Ausführungsvarianten ergeben sich aus den abhängigen Patentansprüchen.

Das Wesen der Erfindung besteht darin, dass beim erfindungsgemässen Verfahren zum Verbinden eines Verbindungsbereiches eines emaillierten Stahlbauteils mit einem weiteren Verbindungsbereich eines weiteren emaillierten Stahlbauteils, wobei der Verbindungsbereich und der weitere Verbindungsbereich jeweils einen emaillierten Bereich und einen nicht emaillierten Bereich umfassen, der Verbindungsbereich und der weitere Verbindungsbereich zusammengefügt werden. Anschliessend werden die emaillierten Bereiche des Verbindungsbereichs und des weiteren Verbindungsbereichs stoffschlüssig verbunden sowie werden die nicht emaillierten Bereiche des Verbindungsbereichs und des weiteren Verbindungsbereichs stoffschlüssig verbunden.

Ein stoffschlüssiges Verbinden der emaillierten Bereiche des Verbindungsbereichs und des weiteren Verbindungsbereichs ermöglicht eine dichte Verbindung zweier emaillierter Stahlbauteile ohne Einsatz einer Dichtung zu realisieren, um anschliessend beispielsweise hochkorrosive Produkte transportieren zu können. Ein stoffschlüssiges Verbinden der nicht emaillierten Bereiche des Verbindungsbereichs und des weiteren Verbindungsbereichs ermöglicht eine mechanisch stabile Verbindung, ansonsten das Email unter mechanischen Einflüssen brechen würde. Auch ist der Platzbedarf einer solchen Lösung gering, da weder Flansche, Flanschmanschetten, noch Muttern oder Schrauben eingesetzt werden. Ohne Dichtung reduziert sich auch der Wartungsaufwand beträchtlich. Die Stahlbauteile können auch aus Edelstahl sein. Das emaillierte Stahlbauteil bzw. das weitere emaillierte Stahlbauteil ist vorzugsweise ein Rohrteil, ein Behälter, ein Apparatestutzen oder eine Apparatewand. Alternativ kann aber auch jedes andere emaillierte Stahlbauteil gemäss dem erfindungsgemässen Verfahren mit einem weiteren emaillierten Stahlbauteil stoffschlüssig verbunden werden.

Vorzugsweise werden beim erfindungsgemässen Verfahren die jeweils nicht emaillierten Bereiche des emaillierten Stahlbauteils und des weiteren emaillierten Stahlbauteils entweder direkt oder über ein Verbindungsstück stoffschlüssig verbunden. Beim Einsatz eines Verbindungsstücks kann der Verbindungsbereich des emaillierten Stahlbauteils genau gleich wie der weitere Verbindungsbereich des weiteren emaillierten Stahlbauteils konstruiert sein. Es kann beispielsweise ein Rohr produziert werden, das an seinen Enden jeweils identische Verbindungsbereiche aufweist. Dies vereinfacht sowohl Produktion, Lagerung als auch Einsatz der zu verwendenden emaillierten Stahlbauteile.

Mit Vorteil werden beim erfindungsgemässen Verfahren der jeweilige emaillierte Bereich des Verbindungsbereichs und des weiteren Verbindungsbereichs sowie der jeweilige nicht emaillierte Bereich des Verbindungsbereichs und des weiteren Verbindungsbereichs in einem einzigen Arbeitsschritt verbunden. Bevorzugt werden beim erfindungsgemässen Verfahren die jeweiligen emaillierten und nicht emaillierten Bereiche jeweils in einem Löt- oder Schweissvorgang verbunden. Bei einem Löt- oder Schweissvorgang kann unter Hitzeeinwirkung sowohl ein stoffschlüssiges Verbinden der nicht emaillierten Bereiche des Verbindungsbereichs und des weiteren Verbindungsbereichs, als auch mit derselben Hitzeeinwirkung gleichzeitig ein stoffschlüssiges Verbinden der emaillierten Bereiche des Verbindungsbereichs und des weiteren Verbindungsbereichs vorgenommen werden. Durch die Hitzeeinwirkung verschmelzen die jeweiligen emaillierten Bereiche und werden dicht und sauber miteinander verbunden. Dies ermöglicht ein rationelles und schnelles Arbeiten beim Installieren emaillierter Stahlbauteile, die mit dem erfindungsgemässen Verfahren verbunden werden.

Vorteilhafterweise werden beim erfindungsgemässen Verfahren vor dem Löt- oder Schweissvorgang das emaillierte Stahlbauteil und das weitere emaillierte Stahlbauteil über eine formschlüssige Verbindung, z. B. über eine Axialsicherung, verbunden. Vor und während dem Löt- oder Schweissvorgang muss das emaillierte Stahlbauteil und das weitere emaillierte Stahlbauteil stabil zueinander zusammengefügt und zusammengehalten werden, damit sowohl die nicht emaillierten Bereiche, als auch die emaillierten Bereiche dauerhaft miteinander verbunden werden können. Dies wird durch die formschlüssige Verbindung zwischen dem emaillierten Stahlbauteil und dem nicht emaillierten Stahlbauteil bewerkstelligt.

Bevorzugt wird beim erfindungsgemässen Verfahren nach dem Löt- oder Schweissvorgang die formschlüssige Verbindung entfernt. Nach dem Löt- oder Schweissvorgang kann die formschlüssige Verbindung wieder entfernt werden, da die stoffschlüssige Verbindung der nicht emaillierten Bereiche eine mechanisch stabile Verbindung des emaillierten Stahlbauteils und des weiteren emaillierten Stahlbauteils ermöglicht. Alternativ kann aber die formschlüssige Verbindung in Form einer zusätzlichen Sicherung, z. B. in Form einer Axialsicherung, bestehen bleiben.

Mit Vorteil wird beim erfindungsgemässen Verfahren beim Löt- oder Schweissvorgang ein Hartlötverfahren mit einer Wärmequelle eingesetzt. Ein Hartlötverfahren erzeugt die notwendige Wärme, um in einem einzigen Arbeitsschritt sowohl die stoffschlüssige Verbindung der nicht emaillierten Bereiche, als auch der emaillierten Bereiche zu bewerkstelligen. Der Einsatz einer Wärmequelle, z. B. mittels einer Spule, die um das zu verbindende emaillierte Stahlbauteil und um das weitere zu verbindende emaillierte Stahlbauteil angeordnet wird, ermöglicht ein stabiles und dichtes Verbinden der jeweiligen emaillierten Stahlbauteile. Das erfindungsgemässe Verfahren kann auch direkt vor Ort vorgenommen werden. Anlässlich des Hartlötverfahrens wird eine Temperatur von 650°C bis 900°C eingesetzt, bevorzugt eine Temperatur von 700°C bis 860°C. Eine gleichmässige Aufheizung ist sehr wichtig beim erfindungsgemässen Verfahren, um eine durchgehend stabile Verbindung zu erzielen. Idealerweise kann diese gleichmässige Aufheizung mit einer induktiven Wärmequelle erzielt und kontrolliert werden.

Vorzugsweise wird beim erfindungsgemässen Verfahren während des Lötvorgangs Lot zugeführt. Bevorzugt wird beim erfindungsgemässen Verfahren vor dem Lötvorgang Lot in Form eines Lotrings angebracht. Das Lot kann entweder manuell in Form von Drahtlot oder als Lotring vor dem Lötvorgang zwischen das zu verbindende emaillierte Stahlbauteil und das weitere zu verbindende emaillierte Stahlbauteil angebracht werden. Idealerweise wird Silberlot verwendet.

Mit Vorteil umfassen beim erfindungsgemässen Verfahren das emaillierte Stahlbauteil und/oder das weitere emaillierte Stahlbauteil jeweils einen Rohrteil aus Stahl oder einen Apparatestutzen aus Stahl mit einer emaillierten Innenseite. Die mit dem erfindungsgemässen Verfahren verbundenen Rohrteile können beispielsweise als Verbindungsleitungen in der chemischen Industrie eingesetzt werden, währenddem Apparatestutzen die Rohrteile der Verbindungsleitungen mit Apparaten verbinden. Die Innenseiten sind mit säurefestem oder hochsäurefestem Email (Chemieemail) beschichtet und ermöglichen den Transport hochkorrosiver Produkte.

Vorzugsweise umfasst beim erfindungsgemässen Verfahren das Verbindungsstück einen Ring mit einem durchgehenden Loch und der jeweilige Rohrteil oder der jeweilige Apparatestutzen eine halbseitig offene Ringnut für die Aufnahme des Rings. Die halbseitig offene Ringnut im jeweiligen Rohrteil und im jeweiligen Apparatestutzen zusammen mit dem Ring ermöglicht auf einfache Weise Verbindungsbereiche zu konstruieren, die identisch ausgebildet und dennoch indirekt via den Ring stoffschlüssig miteinander verbunden werden können. Der Ring als Verbindungsstück ermöglicht eine stabile Verbindung, nachdem der jeweilige Rohrteil oder der jeweilige Apparatestutzen mit dem Ring stoffschlüssig verbunden worden ist. Der bereits vorstehend genannte Lotring wird im Durchmesser leicht kleiner als der Ring gefertigt, so dass er zuverlässig die stoffschlüssige Verbindung zwischen dem jeweiligen emaillierten Stahlbauteil und dem Ring ermöglicht. Das durchgehende Loch im Ring ist als Entlüftungsöffnung für den Hartlötvorgang notwendig. Alternativ kann das durchgehende Loch auch einen Detektor, z. B. einen Drucksensor, aufweisen, um die Dichtigkeit kontinuierlich überprüfen zu können.

Bevorzugt weist beim erfindungsgemässen Verfahren der jeweilige Rohrteil oder der jeweilige Apparatestutzen mindestens eine Vertiefung, z. B. ein Loch oder eine weitere Ringnut, auf, in welche die Axialsicherung formschlüssig einsetzbar ist. Die bereits beschriebene Axialsicherung als formschlüssige Verbindung kann auf einfache Weise in Vertiefungen des jeweiligen Rohrteils oder des jeweiligen Apparatestutzens eingesetzt werden. Beispielsweise kann diese Vertiefung als weitere Ringnut ausgebildet sein.

Ein weiterer Aspekt der Erfindung betrifft eine Verbindung eines emaillierten Stahlbauteils mit einem weiteren emaillierten Stahlbauteil. Das emaillierte Stahlbauteil weist einen Verbindungsbereich und das weitere emaillierte Stahlbauteil einen weiteren Verbindungsbereich auf, wobei der Verbindungsbereich und der weitere Verbindungsbereich jeweils einen emaillierten Bereich und einen nicht emaillierten Bereich umfassen, und wobei die emaillierten Bereiche des Verbindungsbereichs und des weiteren Verbindungsbereichs sowie die nicht emaillierten Bereiche des Verbindungsbereichs und des weiteren Verbindungsbereichs gemäss einer Variante des vorstehend beschriebenen Verfahrens stoffschlüssig verbunden sind.

Eine stoffschlüssige Verbindung der emaillierten Bereiche des Verbindungsbereichs und des weiteren Verbindungsbereichs ermöglicht eine dichte Verbindung zweier emaillierter Stahlbauteile ohne Einsatz einer Dichtung zu realisieren, um anschliessend beispielsweise hochkorrosive Produkte transportieren zu können. Eine stoffschlüssige Verbindung der nicht emaillierten Bereiche des Verbindungsbereichs und des weiteren Verbindungsbereichs ermöglicht eine mechanisch stabile Verbindung, ansonsten das Email unter mechanischen Einflüssen brechen würde. Das emaillierte Stahlbauteil bzw. das weitere emaillierte Stahlbauteil ist vorzugsweise ein Rohrteil, ein Behälter, ein Apparatestutzen oder eine Apparatewand. Alternativ kann aber auch jedes andere emaillierte Stahlbauteil gemäss der erfindungsgemässen Verbindung mit einem weiteren emaillierten Stahlbauteil stoffschlüssig verbunden sein.

Vorzugsweise umfasst bei der erfindungsgemässen Verbindung das emaillierte Stahlbauteil und/oder das weitere emaillierte Stahlbauteil einen Rohrteil aus Stahl und/oder einen Apparatestutzen aus Stahl mit einer emaillierten Innenseite. Die jeweils nicht emaillierten Bereiche der Rohrteile und/oder der Apparatestutzen sind über einen Ring stoffschlüssig miteinander verbunden, wobei der Ring in einer halbseitig offenen Ringnut des Rohrteils und/oder des Apparatestutzens angeordnet ist. Die mit der erfindungsgemässen Verbindung verbundenen Rohrteile können beispielsweise als Verbindungsleitungen in der chemischen Industrie eingesetzt werden, währenddem Apparatestutzen die Rohrteile der Verbindungsleitungen an Apparate kuppeln. Die Innenseiten sind mit säurefestem oder hochsäurefestem Email (Chemieemail) beschichtet und ermöglichen den Transport hochkorrosiver Produkte. Die halbseitig offene Ringnut im jeweiligen Rohrteil und im jeweiligen Apparatestutzen zusammen mit dem Ring ermöglicht auf einfache Weise Verbindungsbereiche zu konstruieren, die identisch ausgebildet und dennoch indirekt via den Ring stoffschlüssig miteinander verbunden werden können. Der Ring als Verbindungsstück ermöglicht eine stabile Verbindung, nachdem der jeweilige Rohrteil oder der jeweilige Apparatestutzen mit dem Ring stoffschlüssig verbunden worden ist.

Mit Vorteil weist bei der erfindungsgemässen Verbindung der jeweilige Rohrteil und/oder der jeweilige Apparatestutzen mindestens eine Vertiefung, z. B. ein Loch oder eine weitere Ringnut, auf, in welcher eine Axialsicherung formschlüssig angeordnet ist. Die bereits beschriebene Axialsicherung als formschlüssige Verbindung kann auf einfache Weise in Vertiefungen des jeweiligen Rohrteils oder des jeweiligen Apparatestutzens eingesetzt werden.

Im Folgenden werden das erfindungsgemässe Verfahren und die erfindungsgemässe Verbindung unter Bezugnahme auf die beigefügten Zeichnungen anhand von Ausführungsbeispielen detaillierter beschrieben. Es zeigen:
- Fig. 1 -: ein erstes Ausführungsbeispiel einer erfindungsge- mässen Verbindung zweier emaillierter Stahlbauteile, bevor die emaillierten Stahlbauteile verbunden wer- den;
- Fig. 2 -: die Verbindung von Fig. 1, nachdem die emaillierten Stahlbauteile verbunden wurden;
- Fig. 3 -: ein zweites Ausführungsbeispiel einer erfindungsge- mässen Verbindung zweier emaillierter Stahlbauteile, bevor die emaillierten Stahlbauteile verbunden wer- den;
- Fig. 4 -: die Verbindung von Fig. 3, nachdem die emaillierten Stahlbauteile verbunden wurden; und
- Fig. 5 -: ein Ausführungsbeispiel eines Apparates mit Appara- testutzen geeignet für die Verwendung in einer er- findungsgemässen Verbindung.

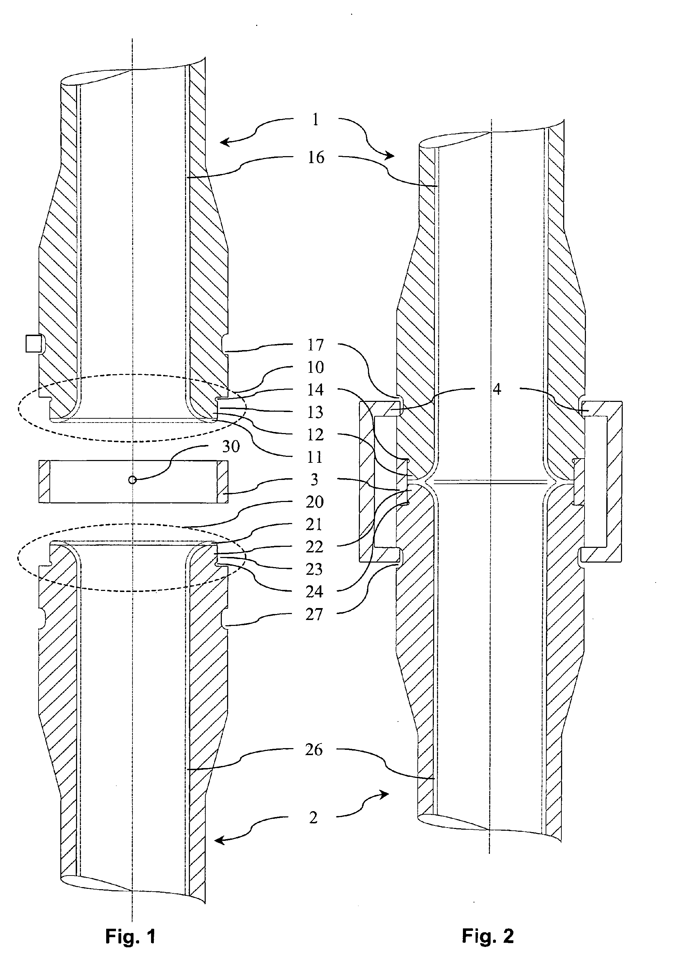

Fig. 1 und Fig. 2 zeigen ein erstes Ausführungsbeispiel einer erfindungsgemässen Verbindung eines Stahlbauteils mit einem weiteren emaillierten Stahlbauteil, vor und nachdem die erfindungsgemässe Verbindung realisiert wurde. Ein Rohrteil 1 aus Stahl als emailliertes Stahlbauteil weist einen Verbindungsbereich 10 auf, der seinerseits einen emaillierten Bereich 11 und einen nicht emaillierten Bereich 12 umfasst. Der Verbindungsbereich 10 umfasst ferner eine halbseitig offene Ringnut 13 zur Aufnahme eines Rings 3 und eine Ringritze 14, wohin das Lot während eines Hartlötvorgangs fliessen kann.

Der Rohrteil 1 weist ferner eine emaillierte Innenseite 16 und eine weitere Ringnut 17 auf. Die emaillierte Innenseite 16 ist durchgehend mit dem emaillierten Bereich 11 des Verbindungsbereichs 10 verbunden, so dass hochkorrosive Produkte transportiert werden können, ohne den Stahl des Rohrteils 1 anzugreifen.

Ein weiterer Rohrteil 2 aus Stahl als weiteres emailliertes Stahlbauteil weist einen Verbindungsbereich 20 auf, der seinerseits einen emaillierten Bereich 21 und einen nicht emaillierten Bereich 22 umfasst. Der Verbindungsbereich 20 umfasst ferner eine halbseitig offene Ringnut 23 zur Aufnahme des Rings 3 und eine Ringritze 24, wohin das Lot während des Hartlötvorgangs fliessen kann. Der weitere Rohrteil 2 weist ferner eine emaillierte Innenseite 26 und eine weitere Ringnut 27 auf. Die emaillierte Innenseite 26 ist durchgehend mit dem emaillierten Bereich 21 des Verbindungsbereichs 20 verbunden, so dass hochkorrosive Produkte transportiert werden können, ohne den Stahl des weiteren Rohrteils 2 anzugreifen.

Der Ring 3 umfasst ein durchgehendes Loch 30, das als Entlüftungsöffnung für den Hartlötvorgang vorhanden ist.

Vor dem Hartlötvorgang wird der Rohrteil 1, ein Lotring, der Ring 3 und der weitere Rohrteil 2 zusammengefügt und mit einer Axialsicherung 4, die in die weitere Ringnut 17, 27 des Rohrteils 1 und des weiteren Rohrteils 2 eingesetzt wird, arretiert. Anschliessend wird mit einer induktiven Wärmequelle der Hartlötvorgang vorgenommen und dabei der jeweilige emaillierte Bereich 11, 21 direkt stoffschlüssig verbunden sowie der jeweilige nicht emaillierte Bereich 12, 22 indirekt via Ring 3 stoffschlüssig verbunden. Nach dem Hartlötvorgang werden die induktive Wärmequelle und die Axialsicherung 4 entfernt. Falls gewünscht, so kann die Axialsicherung 4 auch am Rohrteil 1 und am weiteren Rohrteil 2 befestigt bleiben und für eine zusätzliche mechanische Stabilität der Verbindung sorgen.

Der Verbindungsbereich 10 und der weitere Verbindungsbereich 20 sind identisch ausgebildet und vereinfachen sowohl Produktion, Lagerung als auch Einsatz der zu verwendenden emaillierten Stahlbauteile.

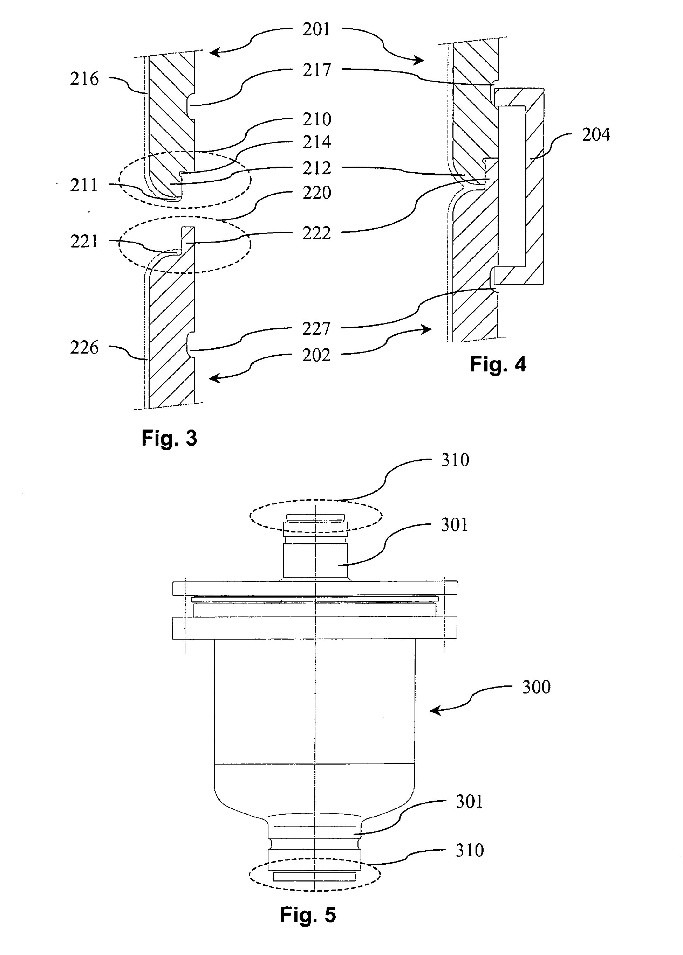

Fig. 3 und Fig. 4 zeigen ein zweites Ausführungsbeispiel einer erfindungsgemässen Verbindung eines Stahlbauteils mit einem weiteren emaillierten Stahlbauteil, vor und nachdem die erfindungsgemässe Verbindung realisiert wurde. Eine Apparatewand 201 aus Stahl als emailliertes Stahlbauteil weist einen Verbindungsbereich 210 auf, der seinerseits einen emaillierten Bereich 211 und einen nicht emaillierten Bereich 212 umfasst. Der Verbindungsbereich 210 umfasst ferner eine Ritze 214, wohin das Lot während eines Hartlötvorgangs fliessen kann. Die Apparatewand 201 weist ferner eine emaillierte Innenseite 216 und eine Nut 217 auf. Die emaillierte Innenseite 216 ist durchgehend mit dem emaillierten Bereich 211 des Verbindungsbereichs 210 verbunden.

Eine weitere Apparatewand 202 aus Stahl als weiteres emailliertes Stahlbauteil weist einen Verbindungsbereich 210 auf, der seinerseits einen emaillierten Bereich 221 und einen nicht emaillierten Bereich 222 umfasst. Die weitere Apparatewand 202 weist ferner eine emaillierte Innenseite 226 und eine Nut 227 auf. Die emaillierte Innenseite 226 ist durchgehend mit dem emaillierten Bereich 221 des Verbindungsbereichs 220 verbunden.

Vor dem Hartlötvorgang wird die Apparatewand 201 und die weitere Apparatewand 202 zusammengefügt und mit einer Axialsicherung 204, die in die Nut 217, 227 der Apparatewand 201 und der weiteren Apparatewand 202 eingesetzt wird, arretiert. Anschliessend wird mit einer Wärmequelle und unter Zufuhr von Lot der Hartlötvorgang vorgenommen und dabei der jeweilige emaillierte Bereich 211, 221 direkt stoffschlüssig verbunden sowie der jeweilige nicht emaillierte Bereich 212, 222 direkt stoffschlüssig verbunden. Nach dem Hartlötvorgang werden die Wärmequelle und die Axialsicherung 204 entfernt.

Fig. 5 zeigt schliesslich ein Ausführungsbeispiel eines Apparates 300 mit Apparatestutzen 301. Der jeweilige Apparatestutzen 301 weist einen Verbindungsbereich 310 auf, der mit einem Rohrteil 1 (siehe Fig. 1) gemäss dem erfindungsgemässen Verfahren stoffschlüssig verbunden werden kann.

Zu den vorbeschriebenen Verbindungen zweier emaillierter Stahlbauteile sind weitere konstruktive Variationen realisierbar. Insbesondere ist auch der Einsatz zusätzlicher Druckmesssensoren zur Ermittlung von Leckagen denkbar.

## Patentansprüche

1. Verfahren zum Verbinden eines Verbindungsbereiches (10; 210; 310) eines emaillierten Stahlbauteils (1; 201; 301) mit einem weiteren Verbindungsbereich (20; 220) eines weiteren emaillierten Stahlbauteils (2; 202), wobei der Verbindungsbereich (10; 210; 310) und der weitere Verbindungsbereich (20; 220) jeweils einen emaillierten Bereich (11, 21; 211, 221) und einen nicht emaillierten Bereich (12, 22; 212, 222) umfassen, bei dem der Verbindungsbereich (10; 210; 310) und der weitere Verbindungsbereich (20; 220) zusammengefügt und anschliessend die emaillierten Bereiche (11, 21; 211, 221) des Verbindungsbereichs (10; 210; 310) und des weiteren Verbindungsbereichs (20; 220) stoffschlüssig verbunden sowie die nicht emaillierten Bereiche (12, 22; 212, 222) des Verbindungsbereichs (10; 210; 310) und des weiteren Verbindungsbereichs (20; 220) stoffschlüssig verbunden werden.

2. Verfahren nach Anspruch 1, wobei die jeweils nicht emaillierten Bereiche (12, 22; 212, 222) des emaillierten Stahlbauteils (1; 201; 301) und des weiteren emaillierten Stahlbauteils (2; 202) entweder direkt oder über ein Verbindungsstück (3) stoffschlüssig verbunden werden.

3. Verfahren nach Anspruch 1 oder 2, wobei der jeweilige emaillierte Bereich (11, 21; 211, 221) des Verbindungsbereichs (10; 210; 310) und des weiteren Verbindungsbereichs (20; 220) sowie der jeweilige nicht emaillierte Bereich (12, 22; 212, 222) des Verbindungsbereichs (10; 210; 310) und des weiteren Verbindungsbereichs (20; 220) in einem einzigen Arbeitsschritt verbunden werden.

4. Verfahren nach einem der Ansprüche 1 bis 3, wobei die jeweiligen emaillierten (11, 21; 211, 221) und nicht emaillierten (12, 22; 212, 222) Bereiche jeweils in einem Löt- oder Schweissvorgang verbunden werden.

5. Verfahren nach Anspruch 4, wobei vor dem Löt- oder Schweissvorgang das emaillierte Stahlbauteil (1; 201; 301) und das weitere emaillierte Stahlbauteil (2; 202) über eine formschlüssige Verbindung, z. B. über eine Axialsicherung (4; 204), verbunden werden.

6. Verfahren nach Anspruch 5, wobei nach dem Löt- oder Schweissvorgang die formschlüssige Verbindung entfernt wird.

7. Verfahren nach einem der Ansprüche 4 bis 6, wobei beim Löt- oder Schweissvorgang ein Hartlötverfahren mit einer Wärmequelle eingesetzt wird.

8. Verfahren nach einem der Ansprüche 4 bis 7, wobei während des Lötvorgangs Lot zugeführt wird.

9. Verfahren nach einem der Ansprüche 4 bis 7, wobei vor dem Lötvorgang Lot in Form eines Lotrings angebracht wird.

10. Verfahren nach einem der Ansprüche 1 bis 9, wobei das emaillierte Stahlbauteil und/oder das weitere emaillierte Stahlbauteil jeweils einen Rohrteil (1, 2) aus Stahl oder einen Apparatestutzen (301) aus Stahl mit einer emaillierten Innenseite (16, 126) umfassen.

11. Verfahren nach Anspruch 10, wobei das Verbindungsstück einen Ring (3) mit einem durchgehenden Loch (30) umfasst und der jeweilige Rohrteil (1, 2) oder der jeweilige Apparatestutzen (301) eine halbseitig offene Ringnut (13, 23) für die Aufnahme des Rings (3) aufweist.

12. Verfahren nach Anspruch 11, wobei der jeweilige Rohrteil (1, 2) oder der jeweilige Apparatestutzen (301) mindestens eine Vertiefung, z. B. ein Loch oder eine weitere Ringnut (17, 27), aufweist, in welche die Axialsicherung (4; 204) formschlüssig einsetzbar ist.

13. Verbindung eines emaillierten Stahlbauteils (1; 201; 301) mit einem weiteren emaillierten Stahlbauteil (2; 202), wobei das emaillierte Stahlbauteil (1; 201; 301) einen Verbindungsbereich (10; 210; 310) und das weitere emaillierte Stahlbauteil (2; 202) einen weiteren Verbindungsbereich (20; 220) aufweisen, wobei der Verbindungsbereich (10; 210; 310) und der weitere Verbindungsbereich (20; 220) jeweils einen emaillierten Bereich (11, 21; 211, 221) und einen nicht emaillierten Bereich (12, 22; 212, 222) umfassen, und wobei die emaillierten Bereiche (11, 21; 211, 221) des Verbindungsbereichs (10; 210; 310) und des weiteren Verbindungsbereichs (20; 220) sowie die nicht emaillierten Bereiche (12, 22; 212, 222) des Verbindungsbereichs (10; 210; 310) und des weiteren Verbindungsbereichs (20; 220) gemäss einem Verfahren nach einem der Ansprüche 1 bis 12 stoffschlüssig verbunden sind.

14. Verbindung nach Anspruch 13, wobei das emaillierte Stahlbauteil und/oder das weitere emaillierte Stahlbauteil einen Rohrteil (1, 2) aus Stahl und/oder einen Apparatestutzen (301) aus Stahl mit einer emaillierten Innenseite (16, 26) umfassen, und die jeweils nicht emaillierten Bereiche (12, 22) der Rohrteile und/oder der Apparatestutzen (301) über einen Ring (3) stoffschlüssig miteinander verbunden sind, wobei der Ring (3) in einer halbseitig offenen Ringnut (13, 23) des Rohrteils (1, 2) und/oder des Apparatestutzens (301) angeordnet ist.

15. Verbindung nach Anspruch 14, wobei der jeweilige Rohrteil (1, 2) und/oder der jeweilige Apparatestutzen (301) mindestens eine Vertiefung, z. B. ein Loch oder eine weitere Ringnut (17, 27), aufweist, in welcher eine Axialsicherung (4; 204) formschlüssig angeordnet ist.
